# EUROPEAN PATENT SPECIFICATION

(11) **EP 3 742 242 B1**
(45) Date of publication and mention of the grant of the patent: **04.10.2023**
(21) Application number: 19176205.3
(22) Date of filing: 23.05.2019
(51) Int. Cl.: G05B 19/05, G06F 8/71

(54) **DISTRIBUTING SOURCE CODE IN AN INDUSTRIAL CONTROL ENVIRONMENT**
VERTEILUNG EINES QUELLCODES IN EINER INDUSTRIELLEN STEUERUNGSUMGEBUNG
DISTRIBUTION DE CODE SOURCE DANS UN ENVIRONNEMENT DE COMMANDE INDUSTRIEL

(43) Date of publication of application: 25.11.2020
(73) Proprietor: CODESYS Holding GmbH, 87439 Kempten (DE)
(72) Inventor: Werner, Bernhard, 87439 Kempten (DE)
(74) Representative: Kretschmann, Dennis

(56) References cited:
- EP-A2- 1 403 782
- JP-A- 2000 322 111
- JP-B2- 3 404 730
- US-A1- 2009 259 676
- US-A1- 2014 228 984
- US-A1- 2018 107 198

## Description

### Field of the Invention

The disclosure relates to techniques for distributing source code in an industrial control environment, in particular in the context of installation or maintenance of an industrial control environment.

### Background

Industrial controller environments are ubiquitous in modern-day manufacturing, and typically comprise at least one industrial controller unit that runs an industrial control program that is adapted to control an associated machinery, and/or to exchange instructions and data with the associated machinery. The industrial control program running on the industrial controller unit may take the form of ladder logic instructions or a compiled machine code. It is oftentimes generated from source code written in a high-level programming language, such as an object-oriented programming language. The source code may be written by the user in a programming environment that is located remotely from the industrial controller unit and may be connected to the industrial controller unit via a network, such as the Internet or a dedicated industrial control network.

In many practically relevant scenarios, it can be desirable to make a reference copy of the source code permanently available to enable other users to amend or further develop the industrial control program at a later stage. Sometimes the source code of the industrial control program is stored on the industrial controller unit for that purpose.

JP 2000 322211 A discloses a programming system wherein a range of a program sequence of a programmable controller is to be edited by a peripheral device (programming device) from a plurality of peripheral devices. The program sequence to be edited is read from the programmable controller to the peripheral device. A management device registers the editing peripheral device and the range being edited in a management table. When the editing is completed, the peripheral device writes the edited program sequence to the programmable controller. An update message with the range of the program sequence edited and its content is sent to the other peripheral devices. JP 3 404730 B2 describes a method with a programmable device and a plurality of connected programming devices. To detect updates of an application program of the programmable controller, the programmable controller comprises an update counter which is incremented every time a programming device writes a new application program to the programmable device. Each programming device also comprises an update counter. The update counters of the programming devices and the one of the programmable controller are compared in periodic scans. If a value of an update counter of a programming device does not match the value of the update counter of the programmable controller, the programming device reads the application program from the programmable controller and the value of its update counter is updated to the value of the update counter of the programmable controller.

However, the storage space on the industrial controller unit may be limited, and hence it may not always be feasible to store the entire source code on the industrial controller unit. In some instances, the source code may be stored on the industrial controller unit in compressed format, but compression and decompression may make the continuous usage of the source code time-consuming and inconvenient for the users.

This is particularly true when an industrial control environment is installed or undergoes maintenance, and several different users may want to work on the same industrial control program code simultaneously from their respective programming units, which may all be connected to the industrial controller unit via the network, but may be located remotely. In an installation or maintenance scenario, a source code file management system may oftentimes not be available, and it becomes a particular challenge to exchange the source code between the different users while keeping it fully consistent.

What is required are fast, efficient and reliable techniques for distributing source code between different users in an industrial control environment, in particular in an installation or maintenance scenario.

### Summary

The present disclosure addresses these problems with an industrial controller unit according to independent claim 1, an industrial control environment according to claim 5, a method of distributing a source code object in an industrial control environment according to independent claim 9 and computer programs according to claims 8 and 11. The dependent claims relate to preferred embodiments.

In a first aspect, the invention relates to an industrial controller unit adapted to be coupled to a plurality of programming units via a network, wherein the industrial controller unit comprises a controller storage element adapted to store a plurality of characteristics associated with a plurality of source code objects of a source code pertaining to an industrial control program, wherein each source code object has at least one characteristic and wherein the at least one characteristic comprises data pertaining to a location of the respective source code object on at least one of the plurality of programming units. The industrial controller unit further comprises a distribution element adapted to receive an inquiry for a source code object from a first programming unit among the plurality of programming units, to retrieve from the controller storage element data pertaining to a corresponding location of the source code object on a second programming unit among the plurality of programming units, the second programming unit being different from the first programming unit, and to cause the source code object to be transferred from the second programming unit to the first programming unit.

Even though the industrial controller unit may not store the entire source code, such as due to insufficient storage capacity, the controller storage element may store a plurality of characteristics associated with the source code objects of the source code. These characteristics may comprise a description of the respective source code objects and data pertaining to location of the source code object on the programming units. This information may allow the distribution element to exchange and share the source code objects among the participating programming units, such as in a maintenance or installation scenario in which different users may use different programming units to work on the same source code objects simultaneously. Thus, in some instances these techniques may allow the industrial controller unit to serve as a file sharing server for the participating programming units. The source code objects may be efficiently and reliably exchanged between the different users, and may be kept up-to-date even though no central source code management and repository may be available.

According to an embodiment, the industrial controller unit may be distinct from and/or remote from the plurality of programming units.

In the context of the present disclosure, the source code objects may comprise any component of an industrial control program. In particular, the source code objects may comprise a program building block of an industrial control program and/or a function of an industrial control program and/or a method of an industrial control program.

In some instances, the source code of the industrial control program may be written in an object-oriented programming language, such as C++, Pascal, Python or a programming language pertaining to the IEC 61131-3 specification. In this context, the source code object, in the sense of the present disclosure, may refer to an object of the object-oriented programming language, which may comprise data, such as in the form of fields or "attributes", and code, such as in the form of procedures or "methods".

In an embodiment, the industrial controller unit may not be adapted to store the plurality of source code objects and/or the source code locally. For instance, the industrial controller unit may have insufficient memory space to store a plurality of source code objects and/or the entire source code locally.

However, the memory space of the industrial controller unit may be sufficient to store the plurality of characteristics associated with the plurality of source code objects.

In the context of the present disclosure, the characteristics of the source code objects may refer to any parameter, information or data that characterises properties of the respective source code object.

According to an embodiment, the characteristics may comprise a name of the source code object and/or a location of the source code object and/or a type of the source code object and/or at time stamp of the source code object and/or a checksum of the source code object and/or a name of a modifier of the source code object.

The location of the source code object may refer to the physical and/or memory location where the respective source code object is stored, in particular on one of the programming units.

The timestamp may refer to a time of a most recent modification of the source code object.

The controller storage element may store the plurality of characteristics in the form of a table or database.

According to the invention, the industrial controller unit is adapted to receive a characteristic from a programming unit. According to an embodiment, the industrial controller unit is adapted to receive the characteristic from the programming units, in particular alongside an industrial control program, such as a compiled industrial control program.

In particular, the programming units may provide the industrial controller unit with a list or set of respective characteristics whenever they sent an industrial control program, or part thereof, to the industrial controller unit, or modify the industrial control program stored on the industrial controller unit.

The inquiry for the source code object that the distribution element receives from the first programming unit may refer to any message or request relating to the source code object.

The distribution element is adapted to receive from the first programming unit, for instance as part of the inquiry, a characteristic of the first source code object stored locally in the first programming unit.

The distribution element is adapted to compare a first characteristic of the first source code object to a corresponding characteristic of the source code object to which the inquiry is directed.

The distribution element causes the source code object to be transferred from the second programming unit to the first programming unit only if the comparison reveals a difference.

In some instances, the distribution element may hence provide the source code object from the second programming unit to the first programming unit only if a comparison reveals that the first source code object stored locally on the first programming unit is not up-to-date, and may hence need to be replaced/ updated.

Alternatively, it may be the first programming unit (rather than the industrial controller unit) that makes that comparison, such as to determine whether to request the source code object from a remote programming unit.

Alternatively, the distribution element is adapted to receive from the first programming unit a request for a characteristic of the source code object, and to provide the characteristic to the first programming unit in response to the request.

According to an embodiment, the distribution element causes the source code object to be transferred from the second programming unit to the first programming unit via the network.

In some instances, the source code object may be transferred via the industrial controller unit. In other instances, the source code object may be transferred directly from the second programming unit to the first programming unit via the network, without the intervening industrial controller unit.

The network, in the sense of the present disclosure, may refer to any network that links a plurality of programming units to the industrial controller unit. The network may be a wired or wireless network, or a hybrid network. In some instances, the network may comprise a dedicated industrial control in a work or factory environment. In other instances, the network may comprise the Internet.

According to an embodiment, the industrial controller unit may be adapted to receive a compiled code based on a first source code object from the first programming unit after a comparison test has been passed between a first characteristic of the first source code object and the corresponding characteristic of the source code object.

Such a test may guarantee that the compiled code provided to the industrial controller unit is always based on source code objects that are up-to-date, so as to guarantee consistency in scenarios in which different users may modify different portions of the source code of the industrial controller unit simultaneously, such as during installation or maintenance of the industrial control environment.

In some embodiments, the controller storage element and/or the distribution element may be implemented in hardware. In other embodiments, the controller storage element and/or the distribution element may be implemented in software/firmware. In still further embodiments, the controller storage element and/or the distribution element may be implemented partly in hardware and partly in software/firmware.

In a second aspect, the disclosure relates to a first programming unit adapted to be coupled to an industrial control unit via a network, the first programming unit comprising a first requesting element adapted to inquire a source code object of a source code pertaining to an industrial control program from an industrial controller unit, the inquiry causing the source code object to be transferred from a second programming unit to the first programming unit, wherein the second programming unit is coupled to the industrial controller unit via the network and stores the source code object. The first programming unit further comprises a first control element adapted to receive the source code object via the network.

The first programming unit is adapted to store a first source code object, and to provide a first characteristic of the first source code object to the industrial controller unit, for comparison of the first characteristic with the characteristic of the inquired source code object in the industrial controller unit.

Alternatively, the first programming unit is adapted to store a first source code object and to receive a characteristic of the source code object from the industrial controller unit in response to the inquiry. The first programming unit is adapted to compare the characteristic of the source code object with a corresponding first characteristic of the first source code object.

According to an embodiment, the first programming unit may be adapted to request the source code object from the industrial controller unit or the second programming unit.

The first programming unit is adapted to request the source code object from the industrial controller unit or the second programming unit only if the comparison reveals a difference.

The first control element may be adapted to receive the source code object via the industrial controller unit.

In other examples, the first control element may be adapted to receive the source code object directly from the second programming unit, without the intervening industrial controller unit.

The first programming unit may check whether its locally stored first source code object is up-to-date, in the way described with reference to the first aspect above, before employing the locally stored first source code object to generate source code and compiled code for the industrial controller unit.

According to an embodiment, the first programming unit is adapted to store a first source code object and to transfer a first compiled code based on the first source code object to the industrial controller unit after a comparison test has been passed between a first characteristic of the source code object and a corresponding characteristic of the first source code object.

In some embodiments, the first requesting element and/or the first control element may be implemented in hardware. In other embodiments, the first requesting element and/or the first control element may be implemented in software/firmware. In still further embodiments, the first requesting element and/or the first control element may be implemented partly in hardware and partly in software/firmware.

In a third aspect, the disclosure relates to a second programming unit, comprising a second storage element adapted to store a source code object of a source code pertaining to an industrial control program. The second programming unit further comprises a second control element adapted to receive a request for the source code object via a network, and to cause the source code object to be provided to a first programming unit different from the second programming unit via the network, in response to the request.

According to an embodiment, the request for the source code object may be received from an industrial controller unit connected to the second programming unit via the network.

According to an embodiment, the source code object may be stored in a non-editable format.

Storing the source code object in the non-editable format may allow the source code object to serve as a reliable reference for the programming units in the network.

In particular, the source code object may be stored in a non-editable format in response to the second programming unit transferring a compiled code pertaining to the source code object to the industrial controller unit.

According to an embodiment, the second control element may be adapted to provide the source code object to the first programming unit via the network.

In some examples, the second control element is adapted to provide the source code object to the industrial controller unit, in particular to the first programming unit via the industrial controller unit.

In some embodiments, the second storage element and/or the second control element may be implemented in hardware. In other embodiments, the second storage element and/or the second control element may be implemented in software/firmware. In still further embodiments, the second storage element and/or the second control element may be implemented partly in hardware and partly in software/firmware.

In the first aspect, the disclosure further relates to a method of distributing a source code object in an industrial control environment, the industrial control environment comprising an industrial controller unit and a plurality of programming units coupled to the industrial controller unit via a network. The method comprises the step of storing, on the industrial controller unit, a plurality of characteristics associated with a plurality of source code objects of a source code pertaining to an industrial control program, wherein each source code object has at least one characteristic and wherein the at least one characteristic comprises data pertaining to a location of the source code object on at least one of the plurality of programming units. The method further comprises the step of receiving an inquiry for a source code object from a first programming unit among the plurality of programming units, a step of identifying a corresponding location of the source code object on a second programming unit among the plurality of programming units, the second programming unit being different from the first programming unit, and a step of causing the source code object to be transferred from the second programming unit to the first programming unit.

According to an embodiment, the method may further comprise the step of receiving the characteristics from the programming units, in particular alongside a compiled industrial control program.

The method comprises the steps of receiving, from the first programming unit, a characteristic of a first source code object stored locally on the first programming unit, comparing a first characteristic of the first source code object to a corresponding characteristic of the source code object, and causing the source code object to be transferred from the second programming unit to the first programming unit only if the comparison reveals a difference.

Alternatively, the method comprises receiving, from the first programming unit, a request for a characteristic of the source code object, and providing the characteristic to the first programming unit in response to the request.

In an embodiment, causing the source code object to be transferred from the second programming unit to the first programming unit comprises requesting, by the industrial controller unit, the source code object from the second programming unit.

According to an alternative embodiment, causing the source code object to be transferred from the second programming unit to the first programming unit may comprise providing the first programming unit with a set of characteristics of the source code object to allow the first programming unit to request the source code object from the second programming unit.

According to an embodiment, the method comprises receiving a compiled code based on a first source code object from the first programming unit after a comparison test has been passed between a first characteristic of the first source code object and a corresponding characteristic of the source code object.

In the second aspect, the disclosure further relates to a method of distributing a source code object in an industrial control environment comprising an industrial controller unit and a plurality of programming units coupled to the industrial controller unit via a network. The method comprises the steps of inquiring, by a first programming unit among the plurality of programming units, a source code object of a source code pertaining to an industrial control program at the industrial controller unit, the inquiry causing the source code object to be transferred from a second programming unit among the plurality of programming units to the first programming unit, wherein the second programming unit stores the source code object; and receiving the source code object via the network.

The method further comprises storing a first source code object; and providing a first characteristic of the first source code object to the industrial controller unit.

Alternatively, the method comprises storing a first source code object; receiving a characteristic of the source code object from the industrial controller unit; and comparing the characteristic of the source code object with a corresponding characteristic of the first source code object.

The method may comprises requesting the source code object from the industrial controller unit or the second programming unit only if the comparison reveals a difference.

According to an embodiment, the method may further comprise storing a first source code object; and transferring a first compiled code based on the first source code object to the industrial controller unit after a comparison test has been passed between the first characteristic of the source code object and a corresponding characteristic of the first source code object.

In the third aspect, the disclosure further relates to a method of distributing a source code object in an industrial control environment, the industrial control environment comprising an industrial controller unit and a plurality of programming units coupled to the industrial controller unit via a network. The method comprises storing, by a second programming unit among the plurality of programming units, a source code object of a source code pertaining to an industrial control program; receiving a request for the source code object via the network; and causing the source code object to be provided to a first programming unit different from the second programming unit via the network, in response to the request.

According to an embodiment, the request for the source code object may be received from the industrial controller unit connected to the second programming unit via the network.

The disclosure further relates to a computer program or a computer program product comprising computer-readable instructions that, when read on a computer, cause the computer to implement a method with some or all of the features described above.

### Brief Description of the Drawings

The features and numerous advantages of the techniques according to the present disclosure will be best apparent from a detailed description of exemplary embodiments with reference to the accompanying drawings, in which:
- Fig. 1: is a schematic illustration of an industrial control environment in which the techniques according to the present disclosure may be employed;
- Fig. 2: is a schematic illustration of an industrial controller unit according to an embodiment;
- Fig. 3: is a schematic illustration of a first programming unit according to an embodiment;
- Fig. 4: is a schematic illustration of a second programming unit according to an embodiment;
- Fig. 5: is a flow diagram illustrating a communication flow between the first programming unit, the controller unit and the second programming unit according to an embodiment;
- Fig. 6: is a flow diagram illustrating a communication flow between the first programming unit, the controller unit and the second programming unit according to another embodiment;
- Fig. 7: illustrates the communication flow and update of source code objects from first and second programming units to a controller unit according to an embodiment;
- Fig. 8: illustrates the management of edited files and reference files of source code objects on a programming unit according to an embodiment;
- Fig. 9: is a flow diagram illustrating a method for updating source code objects and downloading a compiled source code and corresponding characteristics to an industrial controller unit according to an embodiment;
- Fig. 10: is a flow diagram illustrating a method of distributing a source code object in an industrial control environment from the perspective of an industrial controller unit, according to an embodiment;
- Fig. 11: is a flow diagram illustrating a method of distributing a source code object in an industrial control environment from the perspective of a first programming unit, according to an embodiment; and
- Fig. 12: is a flow diagram illustrating a method of distributing a source code object in an industrial control environment from the perspective of a second programming unit, according to an embodiment.

### Description of Embodiments

Examples of techniques for distributing source code in an industrial control environment will now be described with reference to an exemplary industrial control environment 10 that involves control of a gantry crane 12 by means of industrial control software. However, this example is merely for illustration, and in general the techniques according to the present disclosure may be employed for the industrial control of any kind of industrial process, comprising but not limited to control of industrial machinery, robots, chemical fabrication processes, or light control applications.

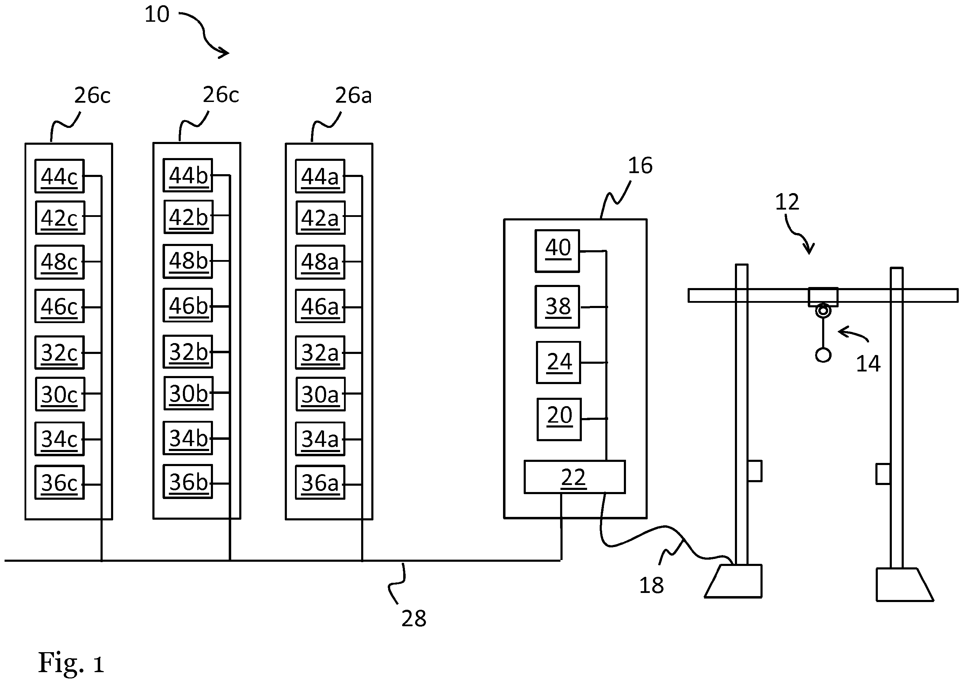

The exemplary industrial control environment 10 of Figure 1 comprises a gantry crane 12, which may be a crane employed in a factory environment to move heavy goods in an assembly hall by means of a movable hook assembly 14.

The industrial control environment 10 further comprises an industrial controller unit 16 that is connected to the gantry crane 12 by means of a control line 18, such as a wired or wireless connection. In other examples, the industrial controller unit 16 may be integrated into the controlled machinery, such as the gantry crane 12.

The industrial controller unit 16 may comprise a processing unit 20, such as a CPU to run an industrial control program, such as in the form of a compiled program for controlling the gantry crane 12. To this end, the industrial controller unit 16 comprises a communication interface 22 that is connected to the processing unit 20 and is adapted to communicate with the gantry crane 12 via the control line 18. For instance, the processing unit 20 may provide instructions to the gantry crane 12 for the operation of actuators to move the hook assembly 14 along a pre-determined path, wherein the instructions may be provided via the communication interface 22 and the control line 18. The communication interface 22 may also receive sensor signals pertaining to an operation of the gantry crane 12 via the control line 18, and provide corresponding feedback to the processing unit 20. For instance, such sensor signals may relate to sensors indicating a position of the hook assembly 14 on the gantry crane 12, or other data relating to an operational state of the gantry crane 12.

As further illustrated in Figure 1, the industrial controller unit 16 also comprises a memory unit 24 connected to the processing unit 20. In particular, the memory unit 24 may be adapted to store programs or data structures pertaining to an operation of the industrial controller unit 16. The memory unit 24 may also store data relating to an operational state of the gantry crane 12, such as sensor data received from the gantry crane 12.

The industrial control environment 10 may further comprise a plurality of programming units 26a, 26b, 26c that are each connected to the communication interface 22 of the industrial controller unit 16 via a network 28, such as a factory intranet or the Internet. For instance, the programming units 26a, 26b, 26c may each comprise a desktop PC or other computing device, and may be employed by different programmers, possibly at different locations, to design and generate industrial control software for the industrial controller unit 16, for instance in the form of an industrial control program in a high-level programming language, such as C or C++ or a programming language pertaining to the IEC 61131-3 specification.

All the programming units 26a, 26b, 26c may be substantially identical in their composition and functionality, and may each comprise a programming interface 30a, 30b, 30c, such as a programming editor or graphical editor that allows a programmer to generate the industrial control program in the high-level programming language. Each of the programming units 26a, 26b, 26c may further comprise a programming memory unit 32a, 32b, 32c and a programming processor unit 34a, 34b, 34c that are connected to the respective programming interface 30a, 30b, 30c. The programming memory unit 32a, 32b, 32c may store source code objects such as functions, function blocks or variables that can be employed by the programmer when generating the industrial control program. The programming processor units 34a, 34b, 34c may provide the processing resources to run the respective programming interfaces 30a, 30b, 30c and to generate the industrial control program.

Each of the programming units 26a, 26b, 26c may further comprise a compiler unit 36a, 36b, 36c that is adapted to convert the industrial control program from the high-level programming language into a compiled industrial control program in machine code. The compiled industrial control program may then be provided to the industrial controller unit 16 via the network 28, may be stored in the memory unit 24 and may be run in the processing unit 22 control operation of the gantry crane 12.

Figure 1 shows an industrial control environment 10 with three programming units 26a, 26b, 26c that are connected to the industrial controller unit 16 via the network 28. However, in other examples there are merely two programming units 26a, 26b. In still further examples, the industrial control environment 10 may comprise more than three programming units.

In some scenarios, different users or programmers may operate the plurality of programming units 26a, 26b, 26c to simultaneously work on industrial control software adapted for the industrial controller unit 16. For instance, Figure 1 may illustrate a scenario in which the industrial control environment 10 undergoes installation or maintenance, and different programmers may simultaneously modify different parts of the industrial control program. A first programmer using the programming unit 26a may work on parts of the industrial control software that relate to the movement control of the hook assembly 14 of the gantry crane 12. A second programmer using the programming unit 26b may work on the parts of the industrial control system that relate to the reading of the movement sensors of the hook assembly 14. A third programmer using the programming unit 26c may work on parts of the industrial control program that relates to a communication and interface unit that allows to access the industrial controller unit 16 and parameter values pertaining to the operational state of the gantry crane 12 remotely.

In the installation or maintenance process, each of the three programmers may produce respective source code objects for the industrial control program running on the industrial controller unit 16, such as program building blocks and/or functions and/or methods for the industrial control program. Based on this source code, the three programmers may also produce corresponding modified versions of the compiled industrial control program for operation of the industrial controller unit 16. In this scenario, it may be a challenge to make sure that the source code versions that the three programmers work with are consistent with one another, and that an update that one of the programmers makes locally at a given programming unit is shared with the other two programmers. In particular, in an installation or maintenance scenario no external source code management may be available to facilitate the exchange of the source code between the programming units 26a, 26b, 26c, and the memory space in the memory unit 24 of the industrial controller unit 16 may be too limited to store the entire source code.

In order to address these challenges, the industrial controller unit 16 may comprise a controller storage element 38 and a distribution element 40. The programming units 26a, 26b, 26c may each comprise a first requesting element 42a, 42b, 42c, a first control element 44a, 44b, 44c, a second storage element 46a, 46b, 46c, and a second control element 48a, 48b, 48c.

The controller storage element 38 may store a plurality of characteristics associated with a plurality of source code objects that can be used and modified by the three programming units 26a, 26b, 26c. The characteristics may amount to a description of the source code objects and may comprise a name of the respective source code object, a location of the respective source code object on one of the three programming units 26a, 26b, 26c, as well as a timestamp indicating a time of a most recent modification of the respective source code object. These characteristics usually require much less memory space than the source code objects themselves, and hence it may be possible to store these characteristics on the industrial controller unit 16 even if the memory capacity of the industrial controller unit 16 may not be sufficient to store the entire source code.

Figure 1 shows the controller storage element 38 as a separate element. However, in other examples it may form part of the memory unit 24.

While the controller storage element 38 stores (only) the characteristics, each of the source code objects may be stored on at least one of the second storage elements 46a, 46b, 46c of the respective programming units 26a, 26b, 26c, where the storage space may be less limited. For instance, each of the source code objects may be stored on the programming unit 26a, 26b, 26c on which this object was generated, or last modified.

Figure 1 shows the respective second storage elements 46a, 46b, 46c as separate elements. However, this is for illustration only, and in other examples the second storage elements 42a, 42b, 42c may form part of the respective programming memory units 32a, 32b, 32c.

As an example, let us assume that a first programmer operating the first programming unit 26a may want to modify a portion of the industrial control program that involves a given source code object, but that source code object may potentially also have been modified by other programmers employing the other programming units 26b, 26c.

To ensure consistency, the first programmer, employing the first requesting element 42a of the first programming unit 26a, may send an inquiry for the source code object to the industrial controller unit 16, such as via the network 28.

The distribution element 40 of the industrial controller unit 16 may be communicatively coupled to the controller storage element 38, and may be adapted to receive the inquiry for the source code object from the first programming unit 26a. The distribution element 40 may retrieve from the controller storage element 38 data pertaining to a corresponding location of the source code object. For instance, the distribution element 40 may find that an updated version of the source code object, e.g., the version with the most recent time stamp, is stored on the second storage element 46b of the second programming unit 26b. The distribution element 40 may now cause the source code object to be transferred from the second programming unit 26b to the first programming unit 26a, such as via the network 28.

For instance, the distribution element 40 may send a request to the second control element 48b of the second programming unit 26b to cause the second programming unit 26b to transfer the required source code object to the first programming unit 26a.

The second control element 48b of the second programming unit 26b receives the request for the source code object from the distribution element 40. In response to the request, the second control element 48b retrieves the source code object from the second storage element 42b, makes a copy of the source code object and sends the required source code object, such as in the form of the copy, to the distribution element 40. The distribution element 40 then in turn forwards the source code object to the first control element 44a of the first programming unit 26a via the network 28.

Alternatively, the second control element 48b sends the (copy of the) source code object directly to the first control element 44a of the first programming unit 26a via the network 28, without the intervening industrial controller unit.

The first control element 48a of the first programming unit 26a may receive the source code object via the network 28. The programming unit 26a may now use the updated source code object for generating the revised source code for the industrial controller unit 16. The updated source code may be compiled by means of the compiler unit 36a, and the compiled revised industrial control program may be sent to the industrial controller unit 16 via the network 28.

In some instances, when the revised industrial control program is sent to the industrial controller unit 16 via the network 28, it may be accompanied by the characteristics of all the source code objects that were modified in the course of generating the revised source code. These characteristics may again be stored in the controller storage element 38, so that they become available for future reference and comparison.

As shown in the example described above with reference to Figure 1, instead of transferring the entire source code or a plurality of source code objects to the industrial controller unit 16, it may be sufficient to store the characteristics on the industrial controller unit 16, whereas the source code or source code objects may remain stored on the programming units 26a, 26b, 26c where they were generated, and may be shared between the programming units 26a, 26b, 26c upon request. The industrial controller unit 16 may serve in these examples as a file sharing server for the programming units 26a, 26b, 26c.

In the example described above with reference to Figure 1, the programming units 26a, 26b, 26c are substantially identical, and each of the programming units 26a, 26b, 26c may serve as the first programming unit requesting the source code object, or as the second programming unit delivering the source code object.

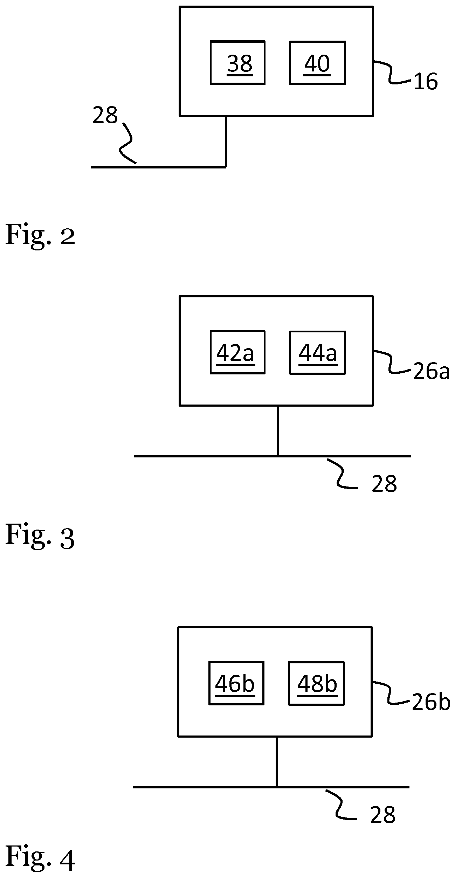

Embodiments of the industrial controller unit 16, the first programming unit 26a and the second programming unit 26b we now be described in additional detail with reference to Figures 2 to 4.

Figure 2 is a schematic illustration of an industrial controller unit 16 according to an embodiment.

The industrial controller unit 16 comprises a controller storage element 38 adapted to store a plurality of characteristics associated with a plurality of source code objects of the source code pertaining to an industrial control program.

Each of the source code objects has at least one characteristic, and the at least one characteristic comprises data pertaining to location of the source code object on at least one of the plurality of programming units 26a, 26b, 26c to which the industrial controller unit 16 is coupled via the network 28.

For instance, the controller storage element 38 may store the plurality of characteristics in the form of a database or table. The characteristics may further comprise a name of the source code object and/or type of the source code object and/or a time stamp of the source code object and/or checksum of the source code object and/or name of a modifier of the source code object, such as name of the programming unit 26a, 26b, 26c on which the source code object was generated or modified.

The industrial controller unit 16 further comprises a distribution element 40 adapted to receive an inquiry for a source code object from a first programming unit among the plurality of programming units, such as from the programming unit 26a, to retrieve from the controller storage element 38 data pertaining to a corresponding location of the source code object on a second programming unit among the plurality of programming units, such as on the programming unit 26b, and to cause that source code object to be transferred from the second programming unit 26b to the first programming unit 26a, via the network 28.

Figure 2 shows the controller storage element 38 and the distribution element 40 as separate elements. However, this is for illustration only, and in some embodiments the controller storage element 38 and the distribution element 40 may be combined into a common element.

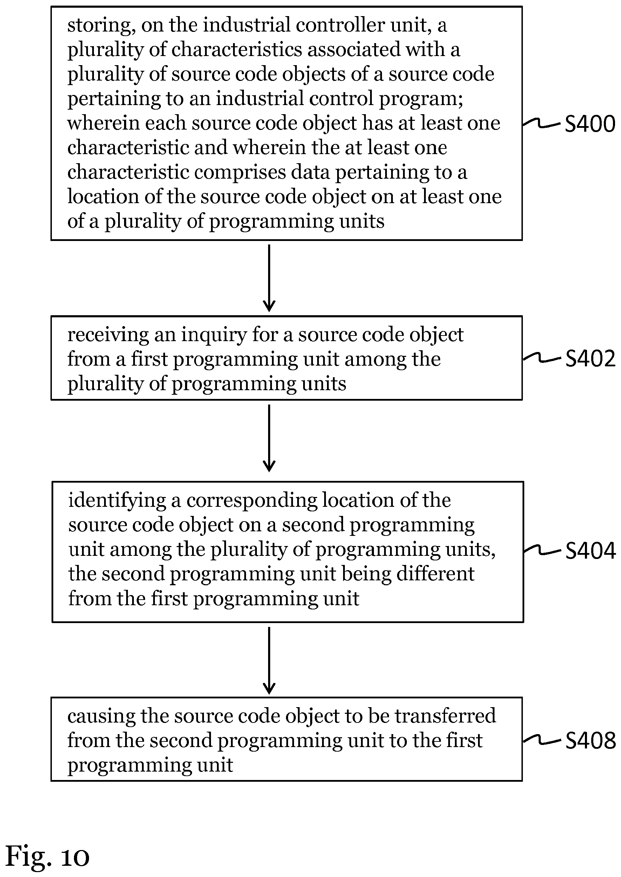

In some examples, the controller storage element 38 and/or the distribution element 40 may be implemented in hardware. In other examples, the controller storage element 38 and/or the distribution element 40 may be at least partially implemented in software or firmware. In these latter examples, the industrial control unit 16 may comprise computer-readable instructions such that these instructions, when read on a computing device, implement on the computing device a method with some or all of the steps described with reference to Fig. 10 below.

Figure 3 is a schematic illustration of a first programming unit 26a according to an embodiment.

The first programming unit 26a comprises a first requesting element 42a adapted to inquire a source code object of a source code pertaining to an industrial control program from an industrial controller unit adapted to be coupled to the first programming unit 26a via a network, the inquiry causing the source code object to be transferred from a second programming unit to the first programming unit 26a, wherein the second programming unit is coupled to the industrial controller unit via the network 28 and stores the source code object.

The first programming unit 26a further comprises a first control element 44a adapted to receive the source code object via the network 28.

Figure 3 shows the first requesting element 42a and the first control element 44a as separate elements. However, this is for illustration only, and in some embodiments the first requesting element 42a and the first control element 44a may be combined into a common element.

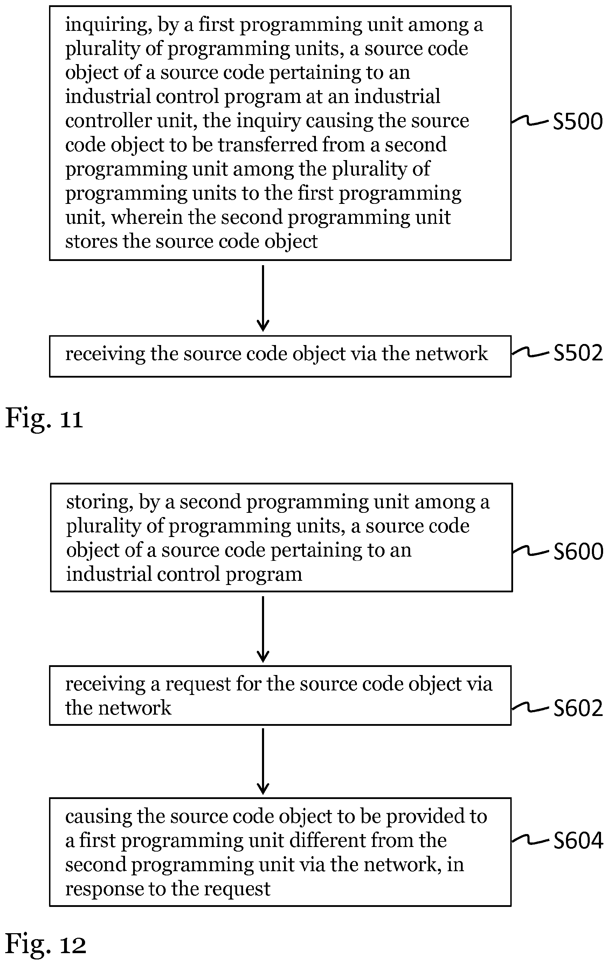

In some examples, the first requesting element 42a and/or the first control element 44a may be implemented in hardware. In other examples, the first requesting element 42a and/or the first control element 44a may be at least partially implemented in software or firmware. In these latter examples, the first programming unit 26a may comprise computer-readable instructions such that these instructions, when read on a computing device, implement on the computing device a method with some or all of the steps described with reference to Fig. 11 below.

Figure 4 is a schematic illustration of a second programming unit 26b according to an embodiment.

The second programming unit 26b comprises a second storage element 46b adapted to store a source code object of a source code pertaining to an industrial control program.

The second programming unit 26b further comprises a second control element 48b adapted to receive a request for the source code object from an industrial controller unit connected to the second programming unit 26b via the network 28, and to cause the source code object to be provided to a first programming unit different from the second programming unit via the network 28, in response to the request.

Figure 4 shows the second storage element 46b and the second control element 48b as separate elements. However, this is for illustration only, and in some embodiments the second storage element 46b and the second control element 48b may be combined into a common element.

In some examples, the second storage element 46b and/or the second control element 48b may be implemented in hardware. In other examples, the second storage element 46b and/or the second control element 48b may be at least partially implemented in software or firmware. In these latter examples, the first programming unit 26b may comprise computer-readable instructions such that these instructions, when read on a computing device, implement on the computing device a method with some or all of the steps described with reference to Fig. 12 below.

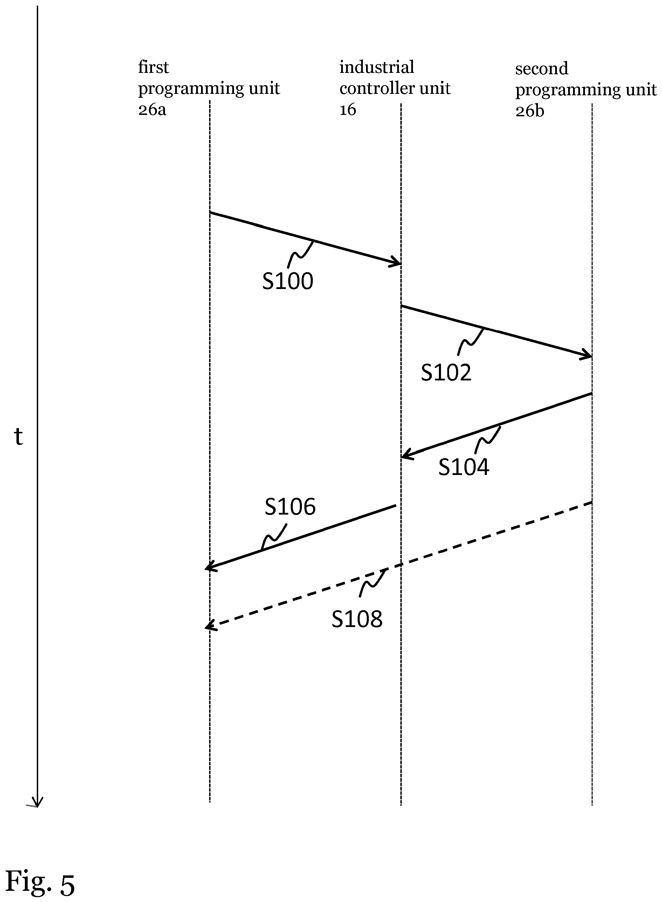

Figure 5 is a flow diagram that illustrates a sequence of steps and messages that may be exchanged between a first programming unit 26a, an industrial controller unit 16 and a second programming unit 26b in the context of an embodiment, such as the embodiment of Fig. 1 to 4. Time flow is from top to bottom in Figure 5, as indicated by the arrow in the left margin.

In a first step S100, the first programming unit 26a sends an inquiry relating to a source code object to the industrial controller unit 16. In some examples, the inquiry may comprise a request for a source code object that the first programming unit may want to use in generating a modified portion of an industrial control program.

In other examples, the inquiry may comprise the characteristics of a source code object that the first programming unit 26a may have stored locally, and may want to use in generating a modified portion of an industrial control program. The industrial controller unit 16 may compare the characteristics provided by the first programming unit 26a with the characteristics of the source code objects stored in a database of the controller storage element 38. The comparison may reveal that the most recent version of the source code object that the first programming unit 26a has inquired can be found on a different programming unit, such as the second programming unit 26b.

In a subsequent step S102, the industrial controller unit 16 may request the required source code object from the second programming unit 26b.

In a subsequent step S104, the second programming unit 26b may provide the source code object to the controller unit 16, for instance subsequently and broken up in a plurality of data blocks. The controller unit 16 may forward the source code object to the requesting first programming unit 26a in a subsequent step S106.

As an alternative to the steps S104 and S106, the second programming unit 26b may, in response to the request received in step S102, directly forward the source code object to the requesting first programming unit 26a, possibly via further programming units or entities, but without the intervening industrial controller unit 16. This alternative is shown in broken lines in Fig. 5, as a step S108.

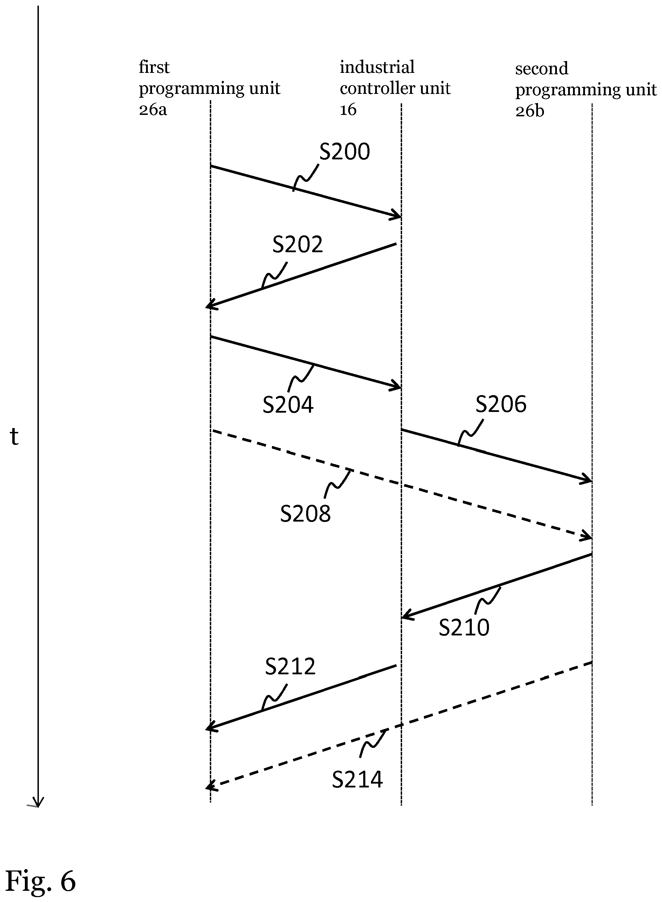

Figure 6 is another flow diagram that illustrates a sequence of steps and messages that may be exchanged between a first programming unit 26a, a controller unit 16 and a second programming unit 26b in the context of another embodiment. Time flow is again from top to bottom, as indicated by the arrow in the left margin.

In the embodiment of Figure 6, it is the first programming unit 26a rather than the industrial controller unit 16 that compares the local source code object with the characteristics of corresponding source code objects stored on other programming units.

In a first step S200, the first programming unit 26a requests from the industrial controller unit 16 the characteristics of a source code object that the first programming unit 26a would like to employ in modifying or generating a source code.

The industrial controller unit 16 receives the request, checks its database in the controller storage element 38 and provides the requested characteristics to the first programming unit 26a in a step S202.

The first programming unit 26a compares the characteristics received from the industrial controller unit 16 against the characteristics of a version of the source code object that the first programming unit 26a has stored locally. In case the first programming unit 26a determines, in the comparison, that a more recent version of the source code object is stored on a different programming unit, such as the second programming unit 26b, the first programming unit 26a requests the industrial controller unit 16, in a step S204, to cause the second programming unit 26b to provide the more recent version of the source code object.

The industrial controller unit 16 may receive the request from the first programming unit 26a, and may forward the request to the second programming unit 26b, in a step S206.

As an alternative to the sequence of steps S204 and S206, the first programming unit 26a may also directly request the source code object from the second programming unit 26b, based on the characteristics received from the industrial controller unit 16. This alternative is shown in broken lines in Figure 6, as a step S208.

The remaining steps can be similar to those described above with reference to Fig. 5. The second programming unit 26b provides the requested source code object to the industrial controller unit 16 in a step S210, and the industrial controller unit 16 passes on the source code object to the first programming unit 26a in a step S212. As an alternative to the sequence of steps S210 and S212, the second programming unit 26b may also directly send the source code object to the first programming unit 26a without the intervening industrial controller unit 16. This alternative is shown in broken lines in Figure 6, as a step S214.

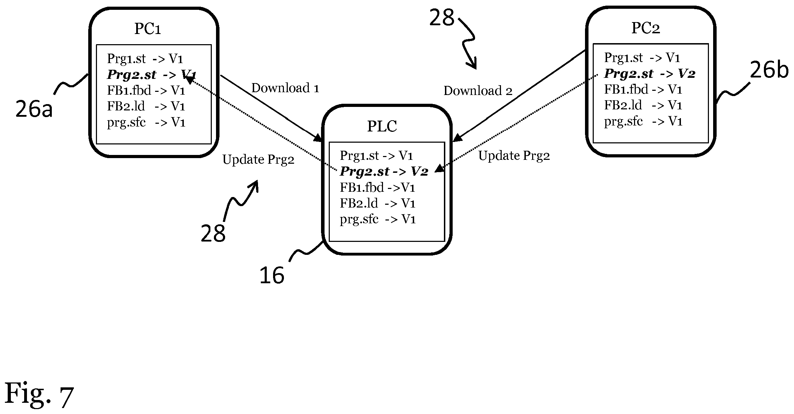

Figure 7 is a schematic diagram that shows examples for source code objects stored locally on the first and second programming units 26a, 26b, as well as their comparison and exchange via the network 28 and the industrial controller unit 16 according to an embodiment.

In the embodiment of Figure 7, the first programming unit 26a, such as a PC workstation, may locally store a plurality of source code objects Prg1.st, Prg2.st, FB1.fbd, FB2.ld., prg.sfc, such as in the programming memory unit 32a or the second storage element 46a. Each of the source code objects may comprise the source code for a program building block for an industrial control program. For instance, the source code objects Prg1.st, Prg2.st may be structured text. The source code object FB1.fbd may be a function block diagram. The source code object FB2.ld may be a ladder logic object, and the source code object prg.sfc may be as sequential function chart.

Corresponding source code objects may also be stored locally in the programming memory unit 32b or the second storage element 46b of the second programming unit 26b, which may be another PC workstation located remotely from the first programming unit 26a. Different source code objects may be stored in several different versions, which are designated V1, V2 in Figure 7. Different versions may differ in specific modifications of the source code object, and a later version V2 may comprise modifications of an earlier version V1.

The industrial controller unit 16, such as a programmable logic controller (PLC) may store the corresponding characteristics of these source code objects. These characteristics may have been provided to the industrial controller unit 16 from the programming units 26a, 26b together with the compiled code that was generated on these programming units 26a, 26b based on the respective source code objects. For simplicity, in the diagram of Figure 7 the characteristics are designated with the same labels Prg1.st, Prg2.st, FB1.fbd, FB2.ld., prg.sfc as the source code objects themselves.

Figure 7 shows a scenario in which the source code objects Prg2.st (highlighted in bold face and italics) is stored in different versions on the programming units 26a, 26b. For instance, a version V1 of the source code object Prg2.st may have been originally generated on the first programming unit 26a, and the corresponding compiled code and the characteristics may have been downloaded to the industrial controller unit 16. However, subsequently the second programming unit 26b may have generated a modified, newer version of the source code object Prg2.st. The corresponding compiled code and the characteristics may have replaced version V1 in the industrial controller unit 16, and hence the first programming unit 26a is no longer up-to-date.

The first programming unit 26a may check whether it has the current version of the source code object Prg2.st by querying the industrial controller unit 16, as described above with reference to Figures 1 to 6. This check may be performed automatically at regular time intervals, or based on a request of the programmer operating the first programming unit 26a. In some examples, a check is done automatically at least before the first programming unit uses the locally stored source code object Prg2.st to generate modified source code and downloads the corresponding compiled code to the industrial controller unit 16.

In case the comparison reveals that the locally stored source code object Prg2.st is not up-to-date, the first programming unit 26a may request the updated version V2 from the second programming unit 26b via the industrial controller unit 16, as described above with reference to the examples of Figures 5 or 6.

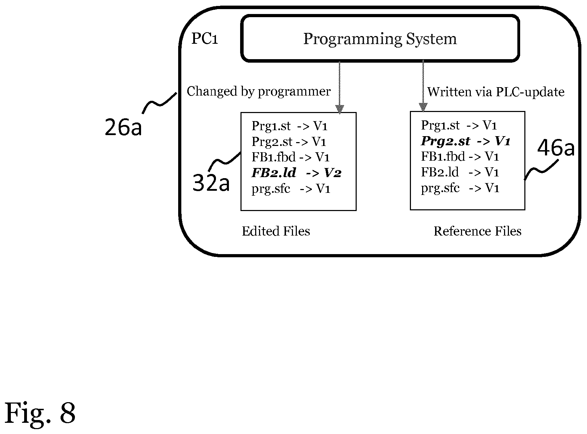

Figure 8 illustrates the operations on the first programming unit 26a according to an embodiment in greater detail.

The table on the right-hand side illustrates the source code objects stored in the second storage element 46a, which may reflect the locally available source code objects at some instance in time, such as after the last automatic synchronisation with the industrial controller unit 16 was made. When the programmer wants to generate or modify source code, he may copy the source code objects from the second storage element 46a into the working memory, such as the programming memory unit 32a. In the situation illustrated in Figure 8, the programmer has already modified the source code object FB2.ld to a version V2 (shown in bold face and italics) in the working memory. However, after the last automatic synchronisation was made, the source code object Prg2.st may have already been amended to a version V2 by the second programming unit 26b, as described above with reference to Figure 7. This is not yet reflected in the second storage element 46a and programming memory unit 32a, which may hence need to be updated before the source code objects, including Prg2.st, are used to generate a new compiled code for download to the industrial controller unit 16.

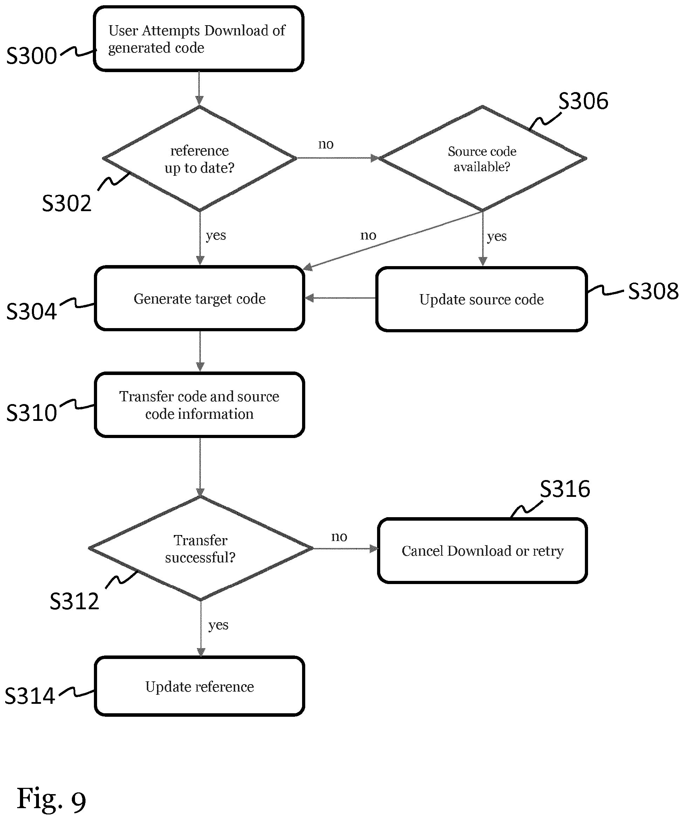

Figure 9 shows an exemplary flow diagram that illustrates the steps that may be taken by the programmer on the first programming unit 26a to make sure that the source code objects are synchronised and updated within the industrial control environment 10.

As part of the user attempt to download compiled code from the first programming unit 26a to the industrial controller unit 16 in step S300, the first programming unit 26a may automatically check with the industrial controller unit 16 whether the source code objects used in the generation of the compiled code are up-to-date (step S302). This check may involve a comparison of locally stored source code objects with the characteristics of the source code objects stored in the industrial controller unit 16, as described above with reference to Figures 1 to 8.

In case the comparison reveals that the locally stored source code objects are up-to-date, the target code may be generated in step S304. The target code may be compiled code that is adapted for download to the industrial controller unit 16.

In case the comparison reveals that the locally stored source code objects are not up-to-date, the first programming unit 26a may request the updated source code objects from a different programming unit via the network, such as from the second programming unit 26b (step S306). The second programming unit 26b may provide the requested source code objects to the first programming unit 26a via the network either directly, or through the industrial controller unit 16, or through some other network links.

The source code objects received from the second programming unit 26b may be employed to update the source code at the first programming unit 26a in step S308. The first programming unit 26a may then again generate the compiled target code (step S304), but in this case based on the received updated source code objects.

In some instances, the comparison in step S306 may reveal that the locally stored source code objects are not up-to-date, but the updated source code may not be available. For instance, the second programming unit 26b may have been temporarily or permanently disconnected from the network 28, and hence may no longer be available to provide an updated source code object. In this instance, the first programming unit 26a may decide to proceed with the generation of the target code in step S304 based on the locally available source code objects.

Following the generation of the compiled target code in step S304, the first programming unit 26a may transfer (download) the target code to the industrial controller unit 16 via the network 28 in step S310. Together with the target code, the first programming unit 26a may also transfer the characteristics of the modified source code objects to the industrial controller unit 16, so that the industrial controller unit 16 may update its controller storage element 38 accordingly. For instance, the first programming unit 26a may transfer the name, type, checksum, a timestamp, a modifier and a local storage location for any source code object that was locally updated and forms the basis of compiled code downloaded to the industrial controller unit 16.

If the transfer was successful (step S312), the first programming unit 26a may store copies of the modified source code objects locally in the second storage element 46a in a step S314. These copies may serve as a basis or reference for later amendments, and may be provided to other programming units in the industrial control environment 10 upon request. In some examples, the reference copies may be stored in a non-editable format, such as to guarantee that this instance of source code objects remains available for other programmers even when the source code is modified further in the industrial controller unit 26a.

In some embodiments, the industrial controller unit 16 may delay an update of the characteristics of the source code objects in the controller storage element 38 until the first programming unit 26a has confirmed to the industrial controller unit 16 that it has stored a local reference in a non-editable format.

If the transfer was not successful, the download may be cancelled or retried (step S316).

Version conflicts can occur if given source code object is modified simultaneously, or almost simultaneously, in two different programming units. These conflicts may be solved by means of an automatic or manual three-way-merge.

Figure 10 is a flow diagram that illustrates an embodiment of a method of distributing a source code object in an industrial control environment. The method may be employed on an industrial controller unit, such as the industrial controller unit 16 described above with reference to Figures 1 to 9.

In a first step S400, the method comprises storing, on the industrial controller unit, a plurality of characteristics associated with a plurality of source code objects of a source code pertaining to an industrial control program. Each source code may have at least one characteristic, and the at least one characteristic comprises data pertaining to a location of the source code object on at least one of a plurality of programming units.

In a second step S402, an inquiry for a source code object is received from the first programming unit among the plurality of programming units.

In a third step S404, a corresponding location of the source code object on a second programming unit among the plurality of programming unit as identified, the second programming unit being different from the first programming unit.

In a fourth step S406, the method comprises causing the source code object to be transferred from the second programming unit to the first programming unit.

Figure 11 is a flow diagram of a method of distributing a source code object in an industrial control environment according to another embodiment. The method may be employed on a first programming unit, such as the first programming unit 26a described above with reference to Figures 1 to 9.

In a first step S500, the method comprises inquiring, by a first programming unit among a plurality of programming units, a source code object of a source code pertaining to an industrial control program at an industrial controller unit that is coupled to the plurality of programming units via a network. The inquiry may cause the source code object to be transferred from the second programming unit among the plurality of programming units to the first programming unit, wherein the second programming unit stores the source code object.

In a second step S502, the method comprises receiving the source code object via the network.

Figure 12 is a flow diagram of a method of distributing a source code object in an industrial control environment according to another embodiment. The method may be employed on a second programming unit, such as the second programming unit 26b described above with reference to Figures 1 to 9.

In a first step S600, the method comprises storing, by a second programming unit among a plurality of programming units, a source code object of a source code pertaining to an industrial control program.

In a second step S602, the method comprises receiving a request for the source code object. For instance, the request for the source code object may be received from an industrial controller unit connected to the second programming unit via a network. In other examples, the request for the source code object may be received from a first programming unit connected to the second programming unit via the network.

In a third step S604, the method comprises causing the source code object to be provided to a first programming unit different from the second programming unit via the network, in response to the request.

The flow diagrams of Figures 10 to 12 show the method steps in a certain order. However, this order is merely exemplary, and may be different in other embodiments.

The description and the Figures merely serve to illustrate the invention and the numerous advantages associated therewith, but should not be understood to imply any limitation. The scope of the invention is to be determined from the appended claims.

## Claims

1. An industrial controller unit (16) adapted to be coupled to a plurality of programming units (26a, 26b, 26c) via a network (28), the industrial controller unit (16) comprising:
a controller storage element (38) adapted to store a plurality of characteristics associated with a plurality of source code objects of a source code pertaining to an industrial control program;
wherein each source code object has at least one characteristic and wherein the at least one characteristic comprises data pertaining to a location of the source code object on at least one of the plurality of programming units (26a, 26b, 26c); and
a distribution element (40) adapted to receive an inquiry for a source code object from a first programming unit (26a) among the plurality of programming units (26a, 26b, 26c), to retrieve from the controller storage element (38) data pertaining to a corresponding location of the source code object on a second programming unit (26b) among the plurality of programming units (26a, 26b, 26c), the second programming unit (26b) being different from the first programming unit (26a), and to cause the source code object to be transferred from the second programming unit (26b) to the first programming unit (26a);
wherein the distribution element (40) is adapted to receive, from the first programming unit (26a), a characteristic of a first source code object stored locally on the first programming unit (26a), and to compare a first characteristic of the first source code object to a corresponding characteristic of the source code object, and is adapted to cause the source code object to be transferred from the second programming unit (26b) to the first programming unit (26a) only if the comparison reveals a difference.

2. The industrial controller unit (16) according to claim 1, wherein the industrial controller unit (16) is not adapted to store the plurality of source code objects, and/ or the source code locally.

3. The industrial controller unit (16) according to any of the preceding claims, wherein the industrial controller unit (16) is adapted to receive the characteristics from the programming units (26a, 26b, 26c), in particular alongside a compiled industrial control program.

4. The industrial controller unit (16) according to any of the preceding claims, wherein the industrial controller unit (16) is adapted to receive a compiled code based on a first source code object from the first programming unit (26a) after a comparison test has been passed between a first characteristic of the first source code object and a corresponding characteristic of the source code object.

5. An industrial control environment (10) comprising a first programming unit (26a) and a second programming unit, each adapted to be coupled to an industrial controller unit (16) via a network (28), wherein the second programming unit comprises a second storage element adapted to store a source code object of a source code pertaining to an industrial control program, and wherein the first programming unit (26a) comprises:
a first requesting element (42a) adapted to send an inquiry for the source code object to an industrial controller unit (16); and
a first control element (44a) adapted to receive the source code object via the network (28),
wherein the second programming unit comprises a second control element (48b) adapted to:
receive a request for the source code object from a distribution element (40) of the industrial controller,
retrieve the source code object from the second storage element (42b) in response to the request,
make a copy of the source code object, and
send the source code object to the first control element directly or via the distribution element,
wherein, according to a first alternative:
the first programming unit (26a) is adapted to store a first source code object, and to provide a first characteristic of the first source code object to the industrial controller unit (16) for comparison in the industrial controller unit (16) of the first characteristic with the characteristic of the inquired source code object; or
wherein, according to a second alternative:
the first programming unit (26a) is adapted to store a first source code object and to receive a characteristic of the source code object from the industrial controller (16) unit in response to the inquiry, to compare the characteristic of the source code object with a corresponding first characteristic of the first source code object, and to request the source code object from the industrial controller unit or the second programming unit only if the comparison reveals a difference.

6. The industrial control environment (10) according to claim 5, wherein the first programming unit (26a) is adapted to transfer a first compiled code based on the first source code object to the industrial controller unit (16) after a comparison test has been passed between a first characteristic of the source code object and a corresponding characteristic of the first source code object.

7. The industrial control environment (10) according to claim 5 or 6, wherein the source code object is stored in a non-editable format, in particular in response to the second programming unit (26b) transferring a compiled code pertaining to the source code object to the industrial controller unit (16).

8. A computer program comprising computer-readable instructions that, when read on an industrial controller unit (16), cause the industrial controller unit (16) to implement a method of distributing a source code object in an industrial control environment (10) comprising the industrial controller unit (16) and a plurality of programming units (26a, 26b, 26c) coupled to the industrial controller unit (16) via a network (28), the method comprising:
storing, on the industrial controller unit (16), a plurality of characteristics associated with a plurality of source code objects of a source code pertaining to an industrial control program;
wherein each source code object has at least one characteristic and wherein the at least one characteristic comprises data pertaining to a location of the source code object on at least one of the plurality of programming units (26a, 26b, 26c); and receiving an inquiry for a source code object from a first programming unit (26a) among the plurality of programming units (26a, 26b, 26c);
identifying a corresponding location of the source code object on a second programming unit (26b) among the plurality of programming units (26a, 26b, 26c), the second programming unit (26b) being different from the first programming unit (26a); and
causing the source code object to be transferred from the second programming unit (26b) to the first programming unit (26a),
wherein, according to a first alternative, the method further comprises:
receiving, from the first programming unit (26a), a characteristic of a first source code object stored locally on the first programming unit (26a);
comparing a first characteristic of the first source code object to a corresponding characteristic of the source code object; and
causing the source code object to be transferred from the second programming unit (26b) to the first programming unit (26a) only if the comparison reveals a difference;
or, according to a second alternative, the method further comprises
receiving, from the first programming unit (26a), a request for a characteristic of the source code object; and
providing the characteristic to the first programming unit (26a) in response to the request.

9. A method of distributing a source code object in an industrial control environment (10) comprising an industrial controller unit (16) and a plurality of programming units (26a, 26b, 26c) coupled to the industrial controller unit (16) via a network (28), the method comprising:
inquiring, by a first programming unit (26a) among the plurality of programming units (26a, 26b, 26c), a source code object of a source code pertaining to an industrial control program at the industrial controller unit (16), the inquiry causing the source code object to be transferred from a second programming unit (26b) among the plurality of programming units (26a, 26b, 26c) to the first programming unit (26a),
wherein the second programming unit (26b) stores the source code object; and
receiving the source code object in the first programming unit (26a) via the network (28);
wherein the method comprises:
storing a first source code object in the first programming unit (26a); and
wherein, according to a first alternative, the method further comprises
receiving, in the first programming unit (26a), a characteristic of the source code object from the industrial controller unit (16);
comparing, by the first programming unit (26a), the characteristic of the source code object with a corresponding characteristic of the first source code object; and
requesting, by the first programming unit (26a), the source code object from the industrial controller unit (16) or the second programming unit (26b) only if the comparison reveals a difference;
or, according to second alternative, the method further comprises
providing, by the first programming unit (26a), a first characteristic of the first source code object to the industrial controller unit (16).

10. The method according to claim 9, further comprising:
transfering a first compiled code based on the first source code object to the industrial controller unit (16) after a comparison test has been passed between a first characteristic of the source code object and a corresponding characteristic of the first source code object.

11. A computer program comprising computer-readable instructions that, when read on a computer, cause the computer to implement a method according to any one of the claims 9 to 10.

## Patentansprüche

1. Industrie-Steuereinheit (16), die dazu eingerichtet ist, über ein Netzwerk (28) mit einer Mehrzahl von Programmiereinheiten (26a, 26b, 26c) gekoppelt zu werden, wobei die Industrie-Steuereinheit (16) aufweist:
ein Steuereinheit-Speicherelement (38), das dazu eingerichtet ist, eine Mehrzahl von Kennangaben zu speichern, die mit einer Mehrzahl von Quellcodeobjekten eines Quellcodes assoziiert sind, der zu einem Industrie-Steuerprogramm gehört;
wobei jedes Quellcodeobjekt wenigstens eine Kennangabe aufweist und wobei die wenigstens eine Kennangabe Daten aufweist, die einen Ort des Quellcodeobjekts auf wenigstens einer der Mehrzahl von Programmiereinheiten (26a, 26b, 26c) betreffen; und
ein Verteilelement (40), das dazu eingerichtet ist, eine Anfrage nach einem Quellcodeobjekt von einer ersten Programmiereinheit (26a) aus der Mehrzahl von Programmiereinheiten (26a, 26b, 26c) zu empfangen, aus dem Steuereinheit-Speicherelement (38) Daten abzurufen, die einen entsprechenden Ort des Quellcodeobjekts auf einer zweiten Programmiereinheit (26b) aus der Mehrzahl von Programmiereinheiten (26a, 26b, 26c) betreffen, wobei die zweite Programmiereinheit (26b) eine andere als die erste Programmiereinheit (26a) ist, und zu bewirken, dass das Quellcodeobjekt von der zweiten Programmiereinheit (26b) an die erste Programmiereinheit (26a) übertragen wird;
wobei das Verteilelement (40) dazu eingerichtet ist, von der ersten Programmiereinheit (26a) eine Kennangabe eines ersten Quellcodeobjekts zu empfangen, das lokal auf der ersten Programmiereinheit (26a) gespeichert ist, und eine erste Kennangabe des ersten Quellcodeobjekts mit einer entsprechenden Kennangabe des Quellcodeobjekts zu vergleichen, und dazu eingerichtet ist, zu bewirken, dass das Quellcodeobjekt nur dann von der zweiten Programmiereinheit (26b) an die erste Programmiereinheit (26a) übertragen wird, wenn der Vergleich einen Unterschied ergibt.

2. Industrie-Steuereinheit (16) nach Anspruch 1, wobei die Industrie-Steuereinheit (16) nicht dazu eingerichtet ist, die Mehrzahl von Quellcodeobjekten und/oder den Quellcode lokal zu speichern.

3. Industrie-Steuereinheit (16) nach einem der vorhergehenden Ansprüche, wobei die Industrie-Steuereinheit (16) dazu eingerichtet ist, die Kennangaben von den Programmiereinheiten (26a, 26b, 26c) zu empfangen, insbesondere zusammen mit einem kompilierten Industrie-Steuerprogramm.

4. Industrie-Steuereinheit (16) nach einem der vorhergehenden Ansprüche, wobei die Industrie-Steuereinheit (16) dazu eingerichtet ist, einen kompilierten Code basierend auf einem ersten Quellcodeobjekt von der ersten Programmiereinheit (26a) zu empfangen, nachdem ein Vergleichstest zwischen einer ersten Kennangabe des ersten Quellcodeobjekts und einer entsprechenden Kennangabe des Quellcodeobjekts bestanden wurde.

5. Industrie-Steuerumgebung (10), aufweisend eine erste Programmiereinheit (26a) und eine zweite Programmiereinheit, die jeweils dazu eingerichtet sind, über ein Netzwerk (28) mit einer Industrie-Steuereinheit (16) gekoppelt zu werden, wobei die zweite Programmiereinheit ein zweites Speicherelement aufweist, das dazu eingerichtet ist, ein Quellcodeobjekt eines Quellcodes zu speichern, der zu einem Industrie-Steuerprogramm gehört, und wobei die erste Programmiereinheit (26a) aufweist:
ein erstes Anforderelement (42a), das dazu eingerichtet ist, eine Anfrage nach dem Quellcodeobjekt an eine Industrie-Steuereinheit (16) zu senden; und
ein erstes Steuerelement (44a), das dazu eingerichtet ist, das Quellcodeobjekt über das Netzwerk (28) zu empfangen,
wobei die zweite Programmiereinheit ein zweites Steuerelement (48b) aufweist, das dazu eingerichtet ist:
eine Anforderung nach dem Quellcodeobjekt von einem Verteilelement (40) der Industrie-Steuereinheit zu empfangen,
das Quellcodeobjekt in Reaktion auf die Anforderung aus dem zweiten Speicherelement (42b) abzurufen,
eine Kopie des Quellcodeobjekts zu erstellen, und
das Quellcodeobjekt direkt oder über das Verteilelement an das erste Steuerelement zu senden,
wobei, gemäß einer ersten Alternative:
die erste Programmiereinheit (26a) dazu eingerichtet ist, ein erstes Quellcodeobjekt zu speichern und der Industrie-Steuereinheit (16) eine erste Kennangabe des ersten Quellcodeobjekts bereitzustellen, um in der Industrie-Steuereinheit (16) die erste Kennangabe mit der Kennangabe des angefragten Quellcodeobjekts zu vergleichen; oder
wobei, gemäß einer zweiten Alternative:
die erste Programmiereinheit (26a) dazu eingerichtet ist, ein erstes Quellcodeobjekt zu speichern und in Reaktion auf die Anfrage eine Kennangabe des Quellcodeobjekts von der Industrie-Steuereinheit (16) zu empfangen, die Kennangabe des Quellcodeobjekts mit einer entsprechenden ersten Kennangabe des ersten Quellcodeobjekts zu vergleichen und das Quellcodeobjekt nur dann von der Industrie-Steuereinheit oder der zweiten Programmiereinheit anzufordern, wenn der Vergleich einen Unterschied aufzeigt.

6. Industrie-Steuerumgebung (10) nach Anspruch 5, wobei die erste Programmiereinheit (26a) dazu eingerichtet ist, einen ersten kompilierten Code basierend auf dem ersten Quellcodeobjekt an die Industrie-Steuereinheit (16) zu übertragen, nachdem ein Vergleichstest zwischen einer ersten Kennangabe des Quellcodeobjekts und einer entsprechenden Kennangabe des ersten Quellcodeobjekts bestanden wurde.

7. Industrie-Steuerumgebung (10) nach Anspruch 5 oder 6, wobei das Quellcodeobjekt in einem nicht editierbaren Format gespeichert wird, insbesondere in Reaktion darauf, dass die zweite Programmiereinheit (26b) einen kompilierten Code, der zu dem Quellcodeobjekt gehört, an die Industrie-Steuereinheit (16) überträgt.

8. Computerprogramm, das computerlesbare Anweisungen aufweist, die, wenn sie auf einer Industrie-Steuereinheit (16) gelesen werden, bewirken, dass die Industrie-Steuereinheit (16) ein Verfahren zum Verteilen eines Quellcodeobjekts in einer Industrie-Steuerumgebung (10) implementiert, die die Industrie-Steuereinheit (16) und eine Mehrzahl von Programmiereinheiten (26a, 26b, 26c), die über ein Netzwerk (28) mit der Industrie-Steuereinheit (16) gekoppelt sind, aufweist, wobei das Verfahren umfasst:
Speichern, auf der Industrie-Steuereinheit (16), einer Mehrzahl von Kennangaben, die mit einer Mehrzahl von Quellcodeobjekten eines Quellcodes assoziiert sind, der zu einem Industrie-Steuerprogramm gehört;
wobei jedes Quellcodeobjekt wenigstens eine Kennangabe aufweist und wobei die wenigstens eine Kennangabe Daten aufweist, die einen Ort des Quellcodeobjekts auf wenigstens einer der Mehrzahl von Programmiereinheiten (26a, 26b, 26c) betreffen; und
Empfangen einer Anfrage nach einem Quellcodeobjekt von einer ersten Programmiereinheit (26a) aus der Mehrzahl von Programmiereinheiten (26a, 26b, 26c);
Identifizieren eines entsprechenden Orts des Quellcodeobjekts auf einer zweiten Programmiereinheit (26b) aus der Mehrzahl von Programmiereinheiten (26a, 26b, 26c), wobei die zweite Programmiereinheit (26b) eine andere als die erste Programmiereinheit (26a) ist; und
Bewirken, dass das Quellcodeobjekt von der zweiten Programmiereinheit (26b) an die erste Programmiereinheit (26a) übertragen wird,
wobei, gemäß einer ersten Alternative, das Verfahren weiterhin umfasst:
Empfangen, von der ersten Programmiereinheit (26a), einer Kennangabe eines ersten Quellcodeobjekts, das lokal auf der ersten Programmiereinheit (26a) gespeichert ist;
Vergleichen einer ersten Kennangabe des ersten Quellcodeobjekts mit einer entsprechenden Kennangabe des Quellcodeobjekts; und
Bewirken, dass das Quellcodeobjekt nur dann von der zweiten Programmiereinheit (26b) an die erste Programmiereinheit (26a) übertragen wird, wenn der Vergleich einen Unterschied ergibt;
oder wobei, gemäß einer zweiten Alternative, das Verfahren weiterhin umfasst:
Empfangen, von der ersten Programmiereinheit (26a), einer Anforderung nach einer Kennangabe des Quellcodeobjekts; und
Bereitstellen der Kennangabe an die erste Programmiereinheit (26a) in Reaktion auf die Anforderung.

9. Verfahren zum Verteilen eines Quellcodeobjekts in einer Industrie-Steuerumgebung (10), die eine Industrie-Steuereinheit (16) und eine Mehrzahl von Programmiereinheiten (26a, 26b, 26c), die über ein Netzwerk (28) mit der Industrie-Steuereinheit (16) gekoppelt sind, aufweist, wobei das Verfahren umfasst:
Anfragen, an der Industrie-Steuereinheit (16) und durch eine erste Programmiereinheit (26a) aus der Mehrzahl von Programmiereinheiten (26a, 26b, 26c), eines Quellcodeobjekts eines Quellcodes, der zu einem Industrie-Steuerprogramm gehört, wobei die Anfrage bewirkt, dass das Quellcodeobjekt von einer zweiten Programmiereinheit (26b) aus der Mehrzahl von Programmiereinheiten (26a, 26b, 26c) an die erste Programmiereinheit (26a) übertragen wird, wobei die zweite Programmiereinheit (26b) das Quellcodeobjekt speichert; und
Empfangen des Quellcodeobjekts in der ersten Programmiereinheit (26a) über das Netzwerk (28);
wobei das Verfahren umfasst:
Speichern eines ersten Quellcodeobjekts in der ersten Programmiereinheit (26a); und
wobei, gemäß einer ersten Alternative, das Verfahren weiterhin umfasst:
Empfangen, an der ersten Programmiereinheit (26a), einer Kennangabe des Quellcodeobjekts von der Industrie-Steuereinheit (16);
Vergleichen, durch die erste Programmiereinheit (26a), der Kennangabe des Quellcodeobjekts mit einer entsprechenden Kennangabe des ersten Quellcodeobjekts; und
Anfordern, durch die erste Programmiereinheit (26a), des Quellcodeobjekts von der Industrie-Steuereinheit (16) oder der zweiten Programmiereinheit (26b) nur dann, wenn der Vergleich einen Unterschied ergibt;
oder wobei, gemäß einer zweiten Alternative, das Verfahren weiterhin umfasst:
Bereitstellen, durch die erste Programmiereinheit (26a), einer ersten Kennangabe des ersten Quellcodeobjekts an die Industrie-Steuereinheit (16).

10. Verfahren nach Anspruch 9, weiterhin umfassend:
Übertragen eines ersten kompilierten Codes basierend auf dem ersten Quellcodeobjekt an die Industrie-Steuereinheit (16), nachdem ein Vergleichstest zwischen einer ersten Kennangabe des Quellcodeobjekts und einer entsprechenden Kennangabe des ersten Quellcodeobjekts bestanden wurde.

11. Computerprogramm, das computerlesbare Anweisungen aufweist, die, wenn sie auf einem Computer gelesen werden, bewirken, dass der Computer ein Verfahren nach einem der Ansprüche 9 bis 10 implementiert.

## Revendications

1. Unité de contrôleur industriel (16) laquelle est apte à être couplée à une pluralité d'unités de programmation (26a, 26b, 26c) par l'intermédiaire d'un réseau (28), l'unité de contrôleur industriel (16) comprenant :
un élément de stockage de contrôleur (38) apte à stocker une pluralité de caractéristiques associées à une pluralité d'objets de code source d'un code source se rapportant à un programme de commande industrielle ;
dans lequel chaque objet de code source présente au moins une caractéristique et dans lequel ladite au moins une caractéristique comprend des données se rapportant à l'emplacement de l'objet de code source sur au moins une unité de la pluralité d'unités de programmation (26a, 26b, 26c) ; et
un élément de distribution (40) apte à recevoir une requête pour un objet de code source en provenance d'une première unité de programmation (26a) parmi la pluralité d'unités de programmation (26a, 26b, 26c), à extraire, de l'élément de stockage de contrôleur (38), des données se rapportant à un emplacement correspondant de l'objet de code source sur une seconde unité de programmation (26b) parmi la pluralité d'unités de programmation (26a, 26b, 26c), la seconde unité de programmation (26b) étant différente de la première unité de programmation (26a), et à amener l'objet de code source à être transféré de la seconde unité de programmation (26b) à la première unité de programmation (26a) ;
dans lequel l'élément de distribution (40) est apte à recevoir, en provenance de la première unité de programmation (26a), une caractéristique d'un premier objet de code source stocké localement sur la première unité de programmation (26a), et à comparer une première caractéristique du premier objet de code source à une caractéristique correspondante de l'objet de code source, et est apte à amener l'objet de code source à être transféré de la seconde unité de programmation (26b) à la première unité de programmation (26a), uniquement si la comparaison révèle une différence.

2. Unité de contrôleur industriel (16) selon la revendication 1, dans laquelle l'unité de contrôleur industriel (16) n'est pas apte à stocker la pluralité d'objets de code source et/ou le code source localement.

3. Unité de contrôleur industriel (16) selon l'une quelconque des revendications précédentes, dans laquelle l'unité de contrôleur industriel (16) est apte à recevoir les caractéristiques en provenance des unités de programmation (26a, 26b, 26c), en particulier en parallèle à un programme de commande industrielle compilé.

4. Unité de contrôleur industriel (16) selon l'une quelconque des revendications précédentes, dans laquelle l'unité de contrôleur industriel (16) est apte à recevoir un code compilé basé sur un premier objet de code source en provenance de la première unité de programmation (26a) après qu'un test de comparaison a été réussi entre une première caractéristique du premier objet de code source et une caractéristique correspondante de l'objet de code source.

5. Environnement de commande industrielle (10) comprenant une première unité de programmation (26a) et une seconde unité de programmation, qui sont chacune aptes à être couplées à une unité de contrôleur industriel (16) par l'intermédiaire d'un réseau (28), dans lequel la seconde unité de programmation comprend un second élément de stockage apte à stocker un objet de code source d'un code source se rapportant à un programme de commande industrielle, et dans lequel la première unité de programmation (26a) comprend :
un premier élément demandeur (42a) apte à envoyer une requête pour l'objet de code source à une unité de contrôleur industriel (16) ; et
un premier élément de commande (44a) apte à recevoir l'objet de code source par l'intermédiaire du réseau (28) ;
dans lequel la seconde unité de programmation comprend un second élément de commande (48b) apte à :
recevoir une demande pour l'objet de code source en provenance d'un élément de distribution (40) du contrôleur industriel ;
extraire l'objet de code source du second élément de stockage (42b) en réponse à la demande ;
réaliser une copie de l'objet de code source ; et
envoyer l'objet de code source au premier élément de commande directement ou par l'intermédiaire de l'élément de distribution ;
dans lequel, selon une première variante :
la première unité de programmation (26a) est apte à stocker un premier objet de code source et à fournir une première caractéristique du premier objet de code source à l'unité de contrôleur industriel (16) en vue d'une comparaison, dans l'unité de contrôleur industriel (16), de la première caractéristique à la caractéristique de l'objet de code source ayant fait l'objet de la requête ; ou
dans lequel, selon une seconde variante :
la première unité de programmation (26a) est apte à stocker un premier objet de code source et à recevoir une caractéristique de l'objet de code source en provenance de l'unité de contrôleur industriel (16) en réponse à la requête, à comparer la caractéristique de l'objet de code source à une première caractéristique correspondante du premier objet de code source, et à demander l'objet de code source auprès de l'unité de contrôleur industriel ou de la seconde unité de programmation, uniquement si la comparaison révèle une différence.

6. Environnement de commande industrielle (10) selon la revendication 5, dans lequel la première unité de programmation (26a) est apte à transférer un premier code compilé basé sur le premier objet de code source à l'unité de contrôleur industriel (16) après qu'un test de comparaison a été réussi entre une première caractéristique de l'objet de code source et une caractéristique correspondante du premier objet de code source.

7. Environnement de commande industrielle (10) selon la revendication 5 ou 6, dans lequel l'objet de code source est stocké dans un format non modifiable, en particulier en réponse au transfert, par la seconde unité de programmation (26b), d'un code compilé se rapportant à l'objet de code source, à l'unité de contrôleur industriel (16).

8. Programme informatique comprenant des instructions lisibles par ordinateur qui, lorsqu'elles sont lues sur une unité de contrôleur industriel (16), amènent l'unité de contrôleur industriel (16) à mettre en oeuvre un procédé de distribution d'un objet de code source dans un environnement de commande industrielle (10) comprenant l'unité de contrôleur industriel (16) et une pluralité d'unités de programmation (26a, 26b, 26c) couplées à l'unité de contrôleur industriel (16) par l'intermédiaire d'un réseau (28), le procédé comprenant les étapes ci-dessous consistant à :
stocker, sur l'unité de contrôleur industriel (16), une pluralité de caractéristiques associées à une pluralité d'objets de code source d'un code source se rapportant à un programme de commande industrielle ;
dans lequel chaque objet de code source présente au moins une caractéristique et dans lequel ladite au moins une caractéristique comprend des données se rapportant à un emplacement de l'objet de code source sur au moins une unité de programmation de la pluralité d'unités de programmation (26a, 26b, 26c) ; et
recevoir une requête pour un objet de code source en provenance d'une première unité de programmation (26a) parmi la pluralité d'unités de programmation (26a, 26b, 26c) ;
identifier un emplacement correspondant de l'objet de code source sur une seconde unité de programmation (26b) parmi la pluralité d'unités de programmation (26a, 26b, 26c), la seconde unité de programmation (26b) étant différente de la première unité de programmation (26a) ; et
amener l'objet de code source a être transféré de la seconde unité de programmation (26b) à la première unité de programmation (26a) ;
dans lequel, selon une première variante, le procédé comprend en outre les étapes ci-dessous consistant à :
recevoir, en provenance de la première unité de programmation (26a), une caractéristique d'un premier objet de code source stocké localement sur la première unité de programmation (26a) ;
comparer une première caractéristique du premier objet de code source à une caractéristique correspondante de l'objet de code source ; et
amener l'objet de code source à être transféré de la seconde unité de programmation (26b) à la première unité de programmation (26a), uniquement si la comparaison révèle une différence ; ou
selon une seconde variante, le procédé comprend en outre les étapes ci-dessous consistant à :
recevoir, en provenance de la première unité de programmation (26a), une demande pour une caractéristique de l'objet de code source ; et
fournir la caractéristique à la première unité de programmation (26a) en réponse à la demande.

9. Procédé de distribution d'un objet de code source dans un environnement de commande industrielle (10) comprenant une unité de contrôleur industriel (16) et une pluralité d'unités de programmation (26a, 26b, 26c) couplées à l'unité de contrôleur industriel (16) par l'intermédiaire d'un réseau (28), le procédé comprenant les étapes ci-dessous consistant à :
effectuer une requête, par le biais d'une première unité de programmation (26a) parmi la pluralité d'unités de programmation (26a, 26b, 26c), pour un objet de code source d'un code source se rapportant à un programme de commande industrielle, au niveau de l'unité de contrôleur industriel (16), la requête amenant l'objet de code source à être transféré d'une seconde unité de programmation (26b), parmi la pluralité d'unités de programmation (26a, 26b, 26c), à la première unité de programmation (26a), dans laquelle la seconde unité de programmation (26b) stocke l'objet de code source ; et
recevoir l'objet de code source dans la première unité de programmation (26a) par l'intermédiaire du réseau (28) ;
dans lequel le procédé comprend les étapes ci-dessous consistant à :
stocker un premier objet de code source dans la première unité de programmation (26a) ; et
dans lequel, selon une première variante, le procédé comprend en outre les étapes ci-dessous consistant à :
recevoir, dans la première unité de programmation (26a), une caractéristique de l'objet de code source en provenance de l'unité de contrôleur industriel (16) ;
comparer, par le biais de la première unité de programmation (26a), la caractéristique de l'objet de code source à une caractéristique correspondante du premier objet de code source ; et
demander, par le biais de la première unité de programmation (26a), l'objet de code source, à l'unité de contrôleur industriel (16) ou à la seconde unité de programmation (26b), uniquement si la comparaison révèle une différence ; ou selon une seconde alternative, le procédé comprend en outre l'étape ci-dessous consistant à :
fournir, par le biais de la première unité de programmation (26a), une première caractéristique du premier objet de code source à l'unité de contrôleur industriel (16).

10. Procédé selon la revendication 9, comprenant en outre l'étape ci-dessous consistant à :
transférer un premier code compilé basé sur le premier objet de code source à l'unité de contrôleur industriel (16) après qu'un test de comparaison a été réussi entre une première caractéristique de l'objet de code source et une caractéristique correspondante du premier objet de code source.

11. Programme informatique comprenant des instructions lisibles par ordinateur qui, lorsqu'elles sont lues sur un ordinateur, amènent l'ordinateur à mettre en oeuvre un procédé selon l'une quelconque des revendications 9 à 10.
